**Europäisches Patentamt**

**European Patent Office**

**Office européen des brevets**

(19)

(11) Veröffentlichungsnummer : **0 222 096**
**B1**

(12) **EUROPÄISCHE PATENTSCHRIFT**

(45) Veröffentlichungstag der Patentschrift :
28.09.88

(51) Int. Cl.⁴ : **B 65 G 49/06**

(21) Anmeldenummer : 86112376.8

(22) Anmeldetag : 06.09.86

(54) Vorrichtung zum Fördern von hochkant stehenden Glasscheiben.

(30) Priorität : 16.10.85 DE 3536846

(43) Veröffentlichungstag der Anmeldung :
20.05.87 Patentblatt 87/21

(45) Bekanntmachung des Hinweises auf die Patenterteilung : 28.09.88 Patentblatt 88/39

(84) Benannte Vertragsstaaten :
AT BE CH DE FR GB IT LI

(56) Entgegenhaltungen :
DE-A- 3 101 342
DE-C- 3 232 451
DE-C- 3 308 079

(73) Patentinhaber : Lenhardt, Karl
Industriestrasse 2-4
D-7531 Neuhausen-Hamberg (DE)

(72) Erfinder : Lenhardt, Karl
Industriestrasse 2-4
D-7531 Neuhausen-Hamberg (DE)

(74) Vertreter : Twelmeier, Ulrich, Dipl.Phys. et al
Patentanwälte Dr. Rudolf Bauer Dipl.-Ing.Helmut Hubbuch, Dipl.Phys. Ulrich Twelmeier Westliche Karl-
Friedrich-Strasse 29-31
D-7530 Pforzheim (DE)

## Beschreibung

Vorrichtung zum Fördern von hochkant stehenden Glasscheiben in waagerechter Richtung mit den Merkmalen gemäß dem Oberbegriff des Patentanspruchs 1 sind Stand der Technik (DE 33 08 079 C2). Sie werden z. B. in Fertigungslinien für Zwei- oder Mehrscheibenisolierglas eingesetzt. Solche Fertigungslinien bestehen i.d.R. aus einer Glasscheibenwaschmaschine, gefolgt von einer Prüfstation, in der die Sauberkeit der Glasscheiben überprüft wird, gefolgt von einer Rahmenauflegestation, in welcher Abstandhalterrahmen auf einzelne Glasscheiben aufgebracht werden, gefolgt von einer Zusammenbaustation, in welcher die Glasscheiben unter Zwischenfügen eines Abstandhalters zusammengelegt und verklebt werden, u.U. gefolgt von einer Presse, in welcher solcherart zusammengelegte Scheiben verpreßt werden, und u.U. gefolgt von einer Versiegelungsstation, in welcher eine am Rand der Isolierglasscheibe gebildete Fuge mittels eines zäh-pastösen Dichtungs-mittels versiegelt wird, und letztlich gefolgt von einer Abnahmestation, in welcher die fertigen Isolierglasscheiben aus der Fertigungslinie entnommen werden. Alle diese Stationen werden von den Glasscheiben stehend durchlaufen, d.h. sie stehen hochkant auf einem Aufstellförderer (meistens eine waagerechte Folge von angetriebenen Rollen, deren Achsen waagerecht oder annähernd waagerecht verlaufen; oder ein unterstütztes, waagerecht laufendes, endloses Förderband; oder eine waagerecht laufende Förderkette mit Auflagern zum Aufstellen der Glasscheiben; oder ein Förderkettenpaar, welches die Einzelglasscheiben oder Isolierglasscheiben am unteren Rand beidseits ergreift und einklemmt und ggfs. durch entsprechende Auflager zusätzlich an den Unterkanten abstützt; die waagerechte oder annähernd waagerechte Ebene, auf welcher die Einzel- oder Isolierglasscheiben mit ihrem unteren Rand stehen, wird hier als die Transportebene bezeichnet) und lehnen sich schwach (meist 5° bis 7°) gegen die Vertikale geneigt gegen eine Stützvorrichtung, damit sie nicht umfallen. Zwischen den genannten Stationen befinden sich noch Zwischentransportstrecken und Staustrecken, welche in gleicher Weise jeweils einen Aufstellförderer und eine seitliche Abstützung aufweisen. Die Stützvorrichtung ist häufig eine Luftkissenwand.

Die Luftkissenwände bestehen i.d. R. aus einer beschichteten Holzplatte, welche zur Bildung von über ihre Vorderseite verteilten Luftaustrittsöffnungen in regelmäßigen Abständen rechtwinklig zu ihrer Vorderseite durchbohrt ist. Die Rückseite der Holzplatte wird bei den bekannten Luftkissenwänden abgedeckt durch einen Kasten, welcher durch die Holzplatte zu einem geschlossenen Gehäuse ergänzt wird, in welches ein Gebläse durch eine Zuleitung Luft bläst, welche durch die Bohrungen in der Holzplatte austritt und dabei eine an der Holzplatte anlehnende Glasscheibe geringfügig von dieser abhebt und zwischen Glasscheibe und Holzplatte ein Luftkissen aufbaut, über welches sich die Glasscheibe berührungsfrei an der Holzplatte abstützen kann.

Es ist in diesem Zusammenhang weiterhin bekannt, in der Nähe des unteren Randes der Holzplatte in dieser eine Zeile von Luftaustrittsöffnungen vorzusehen, deren gegenseitiger Abstand kleiner ist als der Abstand benachbarter Luftaustrittsöffnungen im übrigen Bereich der Holzplatte.

Aus der DE 33 08 079 C2 ist ferner eine Luftkissenwand bekannt, welche keine Luftaustrittsöffnungen in ihrer Vorderseite hat, sondern es ist statt dessen längs unterhalb ihres unteren Randes eine Schlitzdüse mit aufwärts gerichteten Austrittsöffnungen vorgesehen, aus welchen die Gebläseluft in den Zwischenraum zwischen der Stützwand und der daran angelehnten Glasscheibe einströmen kann.

An Vorrichtungen zum Fördern von Glasscheiben wird die Forderung gestellt, daß sie für alle in der Praxis vorkommenden Scheibenformate geeignet sein sollen. Die Spanne der in der Praxis vorkommenden Scheibenformate ist recht groß, sie reicht von Kantenlängen von etwa 20 cm bis zu Kantenlängen von etwa 3m. Bei den bisher bekannten, mit einer Luftkissenwand arbeitenden Fördervorrichtungen für Glasscheiben hat man Probleme, große und schwere sowie kleine und leichte Glasscheiben gleichermaßen gut und zuverlässig zu fördern. Werden bei den bekannten Vorrichtungen die Luftkissenwände für das Fördern schwerer Scheiben optimiert, dann besteht die Gefahr, daß leichte Scheiben zu stark angeblasen werden und von der Stützwand abkippen. Wird hingegen bei bekannten Vorrichtungen die Luftkissenwand für das Fördern leichter Scheiben optimiert, besteht die Gefahr, daß schwere Scheiben nicht von der Stützwand abgehoben werden können, sondern daran schleifen.

Der Erfindung liegt die Aufgabe zugrunde, eine Vorrichtung der eingangs genannten Art dahingehend zu verbessern, daß bei unveränderter Gebläseleistung sowohl kleine und leichte als auch größe und schwere Glasscheiben problemlos und zuverlässig auf einem Luftkissen schwimmend gefördert werden können.

Diese Aufgabe wird gelöst durch eine Vorrichtung mit den im Patentanspruch 1 angegebenen Merkmalen. Vorteilhafte Weiterbildungen der Erfindung sind Gegenstand der Unteransprüche. Überraschenderweise hat sich ergeben, daß Austrittsöffnungen in Gestalt schräg nach oben gerichteter Schlitze, welche längs des unteren Randes der Stützwand in dieser vorgesehen sind, die gestellte Aufgabe lösen können, und zwar insbesondere dann, wenn sie ergänzt werden durch weitere herkömmliche Luftaustrittsöffnungen in der Stützwand, sofern diese sich nicht zu nahe bei den erfindungsgemäßen Schlitzen befinden, sondern erst ab einem Abstand von mindestens 80 cm, vorzugsweise ab einem Abstand von 100 bis 120 cm von der Transportebene in der Stützwand verteilt angeordnet sind. Bei kleinen und leichten Glasscheiben wird durch die aus den Schlitzen austretende Luftströmung zwischen der Stützwand und der jeweiligen Glasscheibe ein Unterdruck erzeugt, der hinreichend groß ist, um ein Abkippen der Glasscheiben von der Stützwand sicher zu verhindern. Bei schweren Glasscheiben, bei denen sonst die Gefahr besteht, dass sie von der Stützwand nicht abgehoben werden können, sondern daran entlang schleifen, wird durch die neuartige Anordnung der Luftaustrittsschlitze das Luftkissen stabilisiert, d.h., dass es auch unter dem Druck schwerer Glasscheiben nicht so leicht zusammenbricht wie bei den bekannten Vorrichtungen. In vorteilhafter Weise kann die Tragfähigkeit des Luftkissens für schwere Glasscheiben durch zusätzliche Luftaustrittsöffnungen im oberen Bereich der Stützwand verbessert werden, wobei diese so hoch angeordnet sind, dass sie zwar die großen und schweren Scheiben anblasen, nicht jedoch die kleinen und leichten, bei welchen eher die Gefahr eines Abkippens bestehen würde.

Damit die Schlitze in der Stützwand ihren Zweck voll und ganz erfüllen können, sollen sie sich im wesentlichen über die volle Länge der Stützwand erstrecken. Im Prinzip kann man die erfindungsgemäß angestrebte Wirkung mit einem einzigen Schlitz erreichen, doch ist es aus konstruktiven Gründen einfacher, in der Stützwand mehrere Schlitze hintereinander anzuordnen.

Welchen Abstand die Schlitze vom unteren Rand der Stützwand haben, richtet sich in erster Linie danach, welche Scheibenformate die Vorrichtung fördern können soll. Wenn - wie es der Praxis entspricht - Formate ab einer Kantenlänge von 20 cm gefördert werden können sollen, dann müssen die Schlitze natürlich entsprechend dicht oberhalb des unteren Randes der Stützwand liegen, vorzugsweise in einem Abstand zwischen 5 und 10 cm von unteren Rand der Stützwand. Ordnet man - wie es auch bei den bekannten Vorrichtungen der Fall ist - die Stützwand so an, daß ihr unterer Rand ungefähr 10 cm oberhalb der Transportebene liegt, dann ist mit Schlitzen, die 5 bis 10 cm oberhalb des unteren Randes der Stützwand liegen, bei Scheiben mit einer Kantenlänge von 20 cm bereits ein einwandfreier Transport möglich.

Um die gewünschte aufwärts gerichtete Strömung zwischen der Stützwand und der jeweiligen Glasscheibe zu erreichen, sieht man in der Stützwand zweckmäßigerweise Luftaustrittsschlitze vor, die in einem Winkel zwischen 40° und 60°, vorzugsweise 45°, zur Vorderseite der Stützwand verlaufen.

Vorzugsweise sind zwischen der Stützwand und dem Aufstellförderer Stützrollen mit rechtwinklig zur Förderrichtung parallel zur Stützwand verlaufender Drehachse vorgesehen, deren Lauffläche ein wenig vor die Vorderseite der Stützwand vorsteht. Dadurch wird erreicht, daß zwischen den Glasscheiben und der Stützwand von vornherein ein geringer, sich von unten nach oben keilförmig verengender Luftspalt besteht, in welchen hinein sich die Luftströmung, welche aus den Schlitzen in der Stützwand austritt, leicht ausbreiten kann. Außerdem wird durch diese Stützrollen verhindert, daß kleine Scheiben durch den in der Luftströmung herrschenden Unterdruck zu stark gegen die Stützwand gedrückt werden, wodurch ihr Lauf gehemmt werden könnte.

Die im oberen Bereich der Stützwand vorzugsweise vorgesehenen zusätzlichen Luftaustrittsöffnungen können im einfachsten Fall rechtwinklig zur Vorderseite der Stützwand verlaufende Bohrungen sein, durch welche die großen Glasscheiben angeblasen werden. Vorzugsweise sind jedoch von den in Augenhöhe (also im Bereich von ungefähr 1,5 bis 1,9 m) liegenden Luftaustrittsöffnungen die Unteren schräg nach unten und die Oberen schräg nach oben gerichtet, damit dem Bedienungspersonal die aus den zeitweise nicht durch Glasscheiben abgedeckten Luftaustrittsöffnungen austretende Luft nicht direkt ins Gesicht geblasen wird.

Ein Ausführungsbeispiel der Erfindung ist in den beigefügten schematischen Zeichnungen dargestellt und wird nachstehend beschrieben.

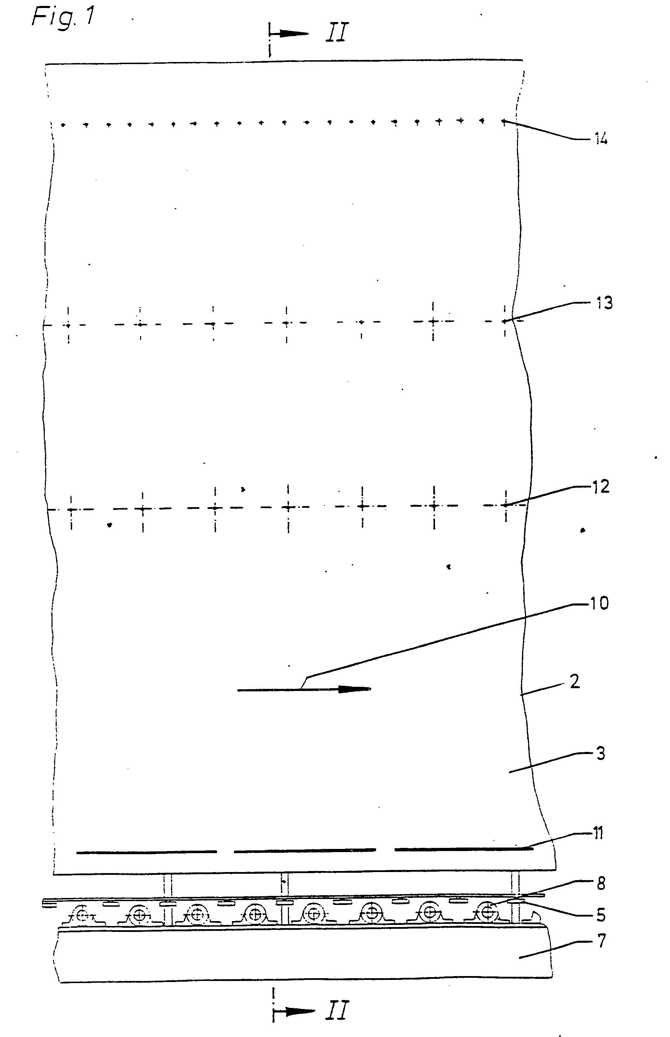

Fig. 1 zeigt eine Ansicht der Vorrichtung von vorne, und

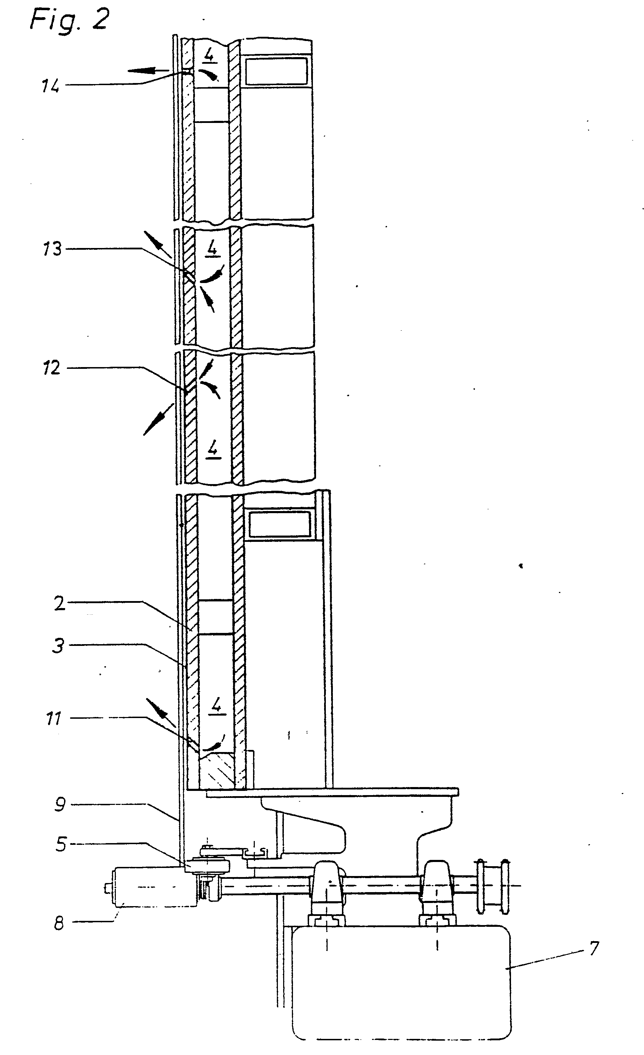

Fig. 2 zeigt im größeren Maßstab den Vertikalschnitt II-II durch diese Vorrichtung.

Auf einem Untergestell ruht eine rechteckige, ebene Stützwand 2, welche in leichter Schräglage (wenige Grad Abweichung von der Vertikalen) gehalten ist. Unterhalb der Stützwand 2 ruht auf dem Untergestell ein sich über die gesamte Länge der Vorrichtung erstreckender, durch ein Gehäuse verkleideter Träger 7, welcher eine Reihe von zylindrischen, synchron antreibbaren Rollen 8 trägt, deren Drehachsen auf übereinstimmendem Niveau rechtwinklig zur Stützwand 2 verlaufen. Die Rollen 8 bilden den Aufstellförderer, auf welchem die Glasscheiben 9 hochkant stehend und gegen die Stützwand 2 gelehnt in waagerechter Richtung (z. B. Pfeil 10) transportiert werden und definieren mit ihrer gemeinsamen oberen Tangentialebene die Transportebene des Aufstellförderers. Nicht weit oberhalb des unteren Randes der Stützwand 2 befinden sich in der Vorderseite 3 der Stützwand in Transportrichtung 10 hintereinander mehrere Schlitze 11, welche parallel zum unteren Rand der Stützwand verlaufen und schräg nach oben gerichtet sind.

Der Abstand des unteren Randes der Stützwand 2 von der Oberseite der Rollen 8 beträgt vorzugsweise nicht mehr als 10 cm, und die Schlitze 11 in der Vorderseite 3 der Stützwand liegen vorzugsweise nicht mehr als 7 cm oberhalb des unteren Randes der Stützwand.

In einem Abstand von 100 bis 120 cm oberhalb der Rollen 8 befindet sich in der Vorderseite 3 der Stützwand eine waagerechte Zeile von Bohrungen 12, welche zweckmässigerweise in regelmäßigen Abständen angeordnet und schräg nach unten gerichtet sind. Oberhalb der Zeile mit den Bohrungen 12 befinden sich weitere Zeilen mit Bohrungen 13 und 14, von denen die Bohrungen 13 schräg nach oben gerichtet und die Bohrungen 14 rechtwinklig zur Vorderseite 3 der Stützwand verlaufen. Ein geeigneter Zeilenabstand ist 30 cm, ein geeigneter Abstand der Bohrungen innerhalb einer Zeile ist 20 bis 25 cm. Unter Zugrundelegung einer Höhe der Rollen 8 oberhalb des Fußbodens von 50 cm liegen die Zeilen mit den Bohrungen 12 und 13 ungefähr in Augenhöhe des Bedienungspersonals, woraus sich die Zweckmäßigkeit ergibt, die unteren Bohrungen 12 schräg nach unten und die oberen Bohrungen 13 schräg nach oben verlaufend anzuordnen, damit die Luft aus ihnen dem Bedienungspersonal nicht in das Gesicht geblasen wird.

Die Schlitze 11 und die Bohrungen 12, 13 und 14 haben Verbindung mit einem Hohlraum 4 in der Stützwand 2, in welchen durch ein nicht dargestelltes Gebläse Luft eingeblasen werden kann, die den Hohlraum 4 durch die Schlitze 11 und die Bohrungen 12, 13 und 14 wieder verläßt.

Zwischen dem unteren Rand der Stützwand 2 und den Rollen 8 ist eine waagerechte Zeile von Stützrollen 5 gestellfest angebracht. Die Stützrollen 5 sind frei drehbar und ihre Drehachse verläuft parallel zur Vorderseite 3 der Stützwand und im rechten Winkel zur Transportrichtung 10. Die Anordnung der Stützrollen 5 ist so getroffen, dass sie mit ihrer Lauffläche, welche zur Auflage an den zu fördernden Glasscheiben 9 bestimmt ist, ein wenig - vorzugsweise 2 bis 5 mm - vor der Ebene liegen, in welcher die Vorderseite 3 der Stützwand 2 liegt. Auf diese Weise halten die Glasscheiben 9 von vornherein in ihrem unteren Bereich einen kleinen Abstand von der Vorderseite 3 der Stützwand ein, wobei sich zwischen beiden ein sich von unten nach oben keilförmig verengender Spalt bildet, in welchen die aus den Schlitzen 11 ausströmende Luft leicht einströmen und ein Luftkissen aufbauen kann, welches die Glasscheiben 9 vollends von der Stützwand 2 abhebt. Andererseits verhindern die Stützrollen 5, dass die Glasscheiben durch den in der Luftströmung zwischen ihnen und der Stützwand herrschenden Unterdruck zu stark an der Stützwand kleben, was ihren Lauf unter Umständen hemmen könnte.

**Patentansprüche**

1. Vorrichtung zum Fördern von hochkant stehenden Glasscheiben (9) in waagerechter Richtung mit einem Aufstellförderer (8), dessen Transportebene waagerecht oder schwach gegen die Waagerechte geneigt angeordnet ist, und mit einer oberhalb des Aufstellförderers (8) angeordneten Stützwand (2) zur seitlichen Abstützung von auf dem Aufstellförderer (8) aufgestellten Glasscheiben (9), welche unter Bildung eines rechten oder annähernd rechten Winkels mit der Transportebene schwach gegen die Senkrechte geneigt ist, wobei zum Erzeugen eines Luftkissens auf der ebenen Vorderseite (3) der Stützwand (2) ein Gebläse vorgesehen ist, dessen Abströmseite durch eine oder mehrere Zuleitungen mit einer oder mehreren schlitzförmigen, aufwärts gerichteten Austrittsöffnung(en) (11) verbunden ist, welche sich längs des unteren Randes der Stützwand erstreckt bzw. erstrecken, dadurch gekennzeichnet, dass die Austrittsöffnungen schräg nach oben gerichtete Schlitze (11) in der Stützwand (2) sind.

2. Vorrichtung nach Anspruch 1, dadurch gekennzeichnet, dass die Schlitze (11) zwischen 5 cm und 10 cm oberhalb des unteren Randes der Stützwand (2) angeordnet sind.

3. Vorrichtung nach Anspruch 1 oder 2, dadurch gekennzeichnet, dass die Schlitze (11) in einem Winkel zwischen 40° und 60° zur Vorderseite der Stützwand (2) verlaufen.

4. Vorrichtung nach einem der vorstehenden Ansprüche, dadurch gekennzeichnet, dass erst ab einem Abstand von mindestens 80 cm, vorzugsweise ab einem Abstand von 100 cm bis 120 cm von der Transportebene weitere Luftaustrittsöffnungen (12-14), insbesondere Bohrungen, in der Stützwand (2) verteilt angeordnet sind.

5. Vorrichtung nach Anspruch 4, dadurch gekennzeichnet, dass von den in Augenhöhe liegenden Luftaustrittsöffnungen (12, 13) die unteren (12) schräg nach unten und die oberen (13) schräg nach oben gerichtet sind.

6. Vorrichtung nach einem der vorstehenden Ansprüche, dadurch gekennzeichnet, dass zwischen der Stützwand (2) und dem Aufstellförderer (8) Stützrollen (5) mit rechtwinklig zur Förderrichtung (10) parallel zur Stützwand (2) verlaufender Drehachse vorgesehen sind, deren Lauffläche ein wenig vor die Vorderseite (3) der Stützwand (2) vorsteht.

**Claims**

1. Apparatus for horizontally conveying glass plates (9) standing on edge, comprising a bottom edge supporting conveyor (8) having a plane of conveyance which is horizontal or is slightly inclined from the horizontal, and a supporting wall (2), which is disposed above the bottom edge supporting conveyor (8) and serves to laterally support glass plates standing on said bottom edge supporting conveyor (8), which supporting wall is slightly inclined from the vertical and includes a right angle or an angle of approximately 90° with the plane of conveyance, wherein a fan for producing an air cushion is provided on the planar front surface (8) of the supporting wall (2) and on its delivery side communicates through one or more ducts with one or more upwardly directed slot-shaped exit openings (11), which extends or extend along the lower edge of the supporting wall, characterized in that the exit openings consist of slots (11), which are formed in the supporting wall (2) and are upwardly inclined.

2. Apparatus according to claim 1, characterized in that the slots (11) are spaced between 5 cm and 10 cm above the bottom edge of the supporting wall (2).

3. Apparatus according to claim 1 or 2, characterized in that the slots (11) extend at an angle between 40° and 60° to the forward surface of the supporting wall (2).

4. Apparatus according to any of the preceding claims, characterized in that additional air exit openings (12 to 14), particularly bores, are distributed in the supporting wall (2) at a distance of at least 80 cm, preferably at least 100 cm to 120 cm, from the plane of conveyance.

5. Apparatus according to claim 4, characterized in that the lower (12) air exit openings (12, 13) disposed on eye level are downwardly inclined and the upper ones (13) are upwardly inclined.

6. Apparatus according to any of the preceding claims, characterized in that backing rollers (5) having axes of rotation to the direction of conveyance (10) and parallel to the supporting wall (2) are provided between the supporting wall (2) and the bottom edge supporting conveyor (8) and have a tread which slightly protrudes in front of the forward surface (3) of the supporting wall (2).

**Revendications**

1. Dispositif de transport de feuilles de verre mises sur chant (9) en direction horizontale avec un transporteur de mise sur chant (8), dont la surface de transport est disposée à l'horizontale ou faiblement inclinée à la verticale, et avec une paroi d'appui (2) disposée au-dessus du transporteur de mise au chant (8) pour l'étayage latéral des feuilles de verre (9) mises sur chant sur le transporteur de mise sur chant (8), la paroi (2) étant inclinée faiblement vers la verticale en formant un angle droit ou presque droit avec la surface de transport, une soufflerie étant prévue sur la face antérieure plane (3) de la paroi d'appui (2) pour la génération d'un coussin d'air dont le côté sortie d'air est relié à une ou plusieurs ouvertures de sortie d'air (11) dirigées vers le haut par une ou plusieurs conduites d'amenée, ouvertures s'étendant le long du bord inférieur de la paroi d'appui, caractérisé en ce que les ouvertures de sortie d'air sont des fentes (11) dans la paroi d'appui (2) dirigées obliquement vers le haut.

2. Dispositif selon la revendication 1, caractérisé en ce que les fentes (11) sont disposées entre 5 et 10 cm au-dessus du bord inférieur de la paroi d'appui (2).

3. Dispositif selon la revendication 1 ou 2, caractérisé en ce que les fentes (11) se situent dans un angle entre 40° et 60° par rapport à la face antérieure de la paroi d'appui (2).

4. Dispositif selon l'une des revendications précédentes, caractérisé en ce que d'autres ouvertures de sortie d'air (12-14), essentiellement des alésages, sont réparties dans la paroi d'appui (2) à partir d'une distance de 100 cm à 120 cm de la surface de transport.

5. Dispositif selon la revendication 4, caractérisé en ce que des ouvertures de sortie d'air (12, 13) se trouvant au niveau des yeux, celles du bas (12) sont dirigées obliquement vers le bas et celles du haut (13) obliquement vers le haut.

6. Dispositif selon l'une des revendications précédentes, caractérisé en ce que entre la paroi d'appui (2) et le transporteur de mise sur chant (8), sont prévus des rouleaux d'appui (5) avec un axe de rotation perpendiculaire à la direction de transport (10) et parallèle à la paroi d'appui (2), dont la surface de roulement fait légèrement saillie devant la face antérieure (3) de la paroi d'appui (2).

Fig. 1

II

14

13

12

10

2

3

11

8

5

7

II

Fig. 2